# EUROPÄISCHE PATENTSCHRIFT

(11) **EP 4 248 506 B1**
(45) Veröffentlichungstag und Bekanntmachung des Hinweises auf die Patenterteilung: **29.07.2026**
(21) Anmeldenummer: 21810919.7
(22) Anmeldetag: 10.11.2021
(51) Int. Cl.: H01M 4/86, H01M 4/88, H01M 8/0213, H01M 8/18

(54) **BAUTEIL EINER REDOX-FLOW-ZELLE SOWIE REDOX-FLOW-ZELLE UND REDOX-FLOW-BATTERIE**
COMPONENT OF A REDOX FLOW CELL, REDOX FLOW CELL, AND REDOX FLOW BATTERY
ÉLÉMENT CONSTITUTIF D'UNE CELLULE REDOX AINSI QUE CELLULE REDOX ET BATTERIE À CIRCULATION

(30) Priorität: 20.11.2020 DE 102020130695
(43) Veröffentlichungstag der Anmeldung: 27.09.2023
(73) Patentinhaber: Schaeffler Technologies AG & Co. KG, 91074 Herzogenaurach (DE)
(72) Erfinder: DOBRENIZKI, Ladislaus, 91315 Höchstadt (DE); OETE, Mehmet, 90482 Nürnberg (DE); BAGCIVAN, Nazlim, 90480 Nürnberg (DE); STUMPF, Jan Martin, 91054 Erlangen (DE); BRUGNARA, Ricardo Henrique, 91093 Heßdorf (DE); SCHULZ, Edgar, 91094 Langensendelbach (DE)
(74) Vertreter: Schaeffler Technologies
(86) Internationale Anmeldenummer: PCT/DE2021/100895
(87) Internationale Veröffentlichungsnummer: WO 2022/105961

(56) Entgegenhaltungen:
- KR-A- 20130 129 622
- KR-B1- 101 371 163
- US-A1- 2019 148 741

## Beschreibung

Die Erfindung betrifft eine Redox-Flow-Zelle umfassend umfassend mindestens Bauteil in Form einer Elektrode, umfassend ein Metallsubstrat, eine auf dem Metallsubstrat zumindest partiell aufgebrachte metallische erste Schicht und eine auf der ersten Schicht aufgebrachte zweite Schicht. Die Erfindung betrifft weiterhin eine Redox-Flow-Batterie.

Flussbatteriesysteme als Speichersysteme ermöglichen eine nachhaltige Energieversorgung für stationäre und mobile Anwendungsfelder mittels erneuerbarer Energien. Um hohe Wirkungsgrade und Leistungsdichten zu erreichen, werden möglichst kompakte Batteriestacks angestrebt. Hohe Leistungsdichten stellen jedoch große Herausforderungen an die einzelnen Komponenten eines Batteriestacks dar. Einen neuen Ansatz stellt hier eine metallische Elektrode mit strukturierter Geometrie dar, um für eine homogene Verteilung eines Elektrolyten im Aktivbereich zu sorgen und gleichzeitig geringe Abstände zur Membrane zu ermöglichen. Auf der anderen Seite erfordern metallische Elektroden entsprechende Oberflächeneigenschaften, die den hohen Anforderungen an eine elektrochemische Stabilität, einen niedrigen Grenzflächenwiderstand sowie eine katalytische Aktivität gerecht werden.

Bei einer Redox-Flow-Zelle oder Redox-Flusszelle werden häufig als Elektroden Kompositplatten umfassend Kunststoff und Grafit (Dicke -0,5 - 0,6 mm) mit einer beidseitig aufgebrachten Ruß-Aktivbeschichtung (Dicke -0,1 - 0,3 mm) eingesetzt, die trockengepresst oder nasschemisch aufgebracht wird. Damit ergibt sich eine Gesamtplattendicke der Elektrode von -0,7 - 1,2 mm, oder sogar bis zu 2mm. Mit metallischen Platten lassen sich Dicken von < 0,5 mm in großflächiger Dimensionierung erzielen. Es ist zudem anzunehmen, dass die Verarbeitbarkeit von großflächigen metallischen Platten günstiger ausfällt im Vergleich zu spritzgegossenen Kunststoffrahmen mit grafitbasierten Elektroden.

Die WO 2018/145720 A1 beschreibt eine Elektrodeneinheit sowie eine Redox-Flow-Batterie oder Redox-Flussbatterie, in welcher eine Elektrodeneinheit eingesetzt wird.

Dabei ist unter anderem beschrieben, das Substrat der Elektrodeneinheit aus einem Kompositmaterial auszubilden.

Die WO 2018/146342 A1 offenbart verschiedene Elektrolyt-Zusammensetzungen auf Lignin-Basis zur Verwendung für Redox-Flow-Batterien.

Die EP 3 469 646 B1 offenbart eine elektrochemische Vorrichtung umfassend einen beschichteten Gegenstand. Der Gegenstand umfasst ein Substrat mit einer Zinnschicht oder Zinnlegierungsschicht und darauf eine elektrisch leitende Verbundbeschichtung, die ein elektrisch leitendes Beschichtungsmaterial, umfassend elementaren Kohlenstoff und einen Korrosionsinhibitor umfassend Azol, enthält.

Die Veröffentlichung "A biomimetic high-capacity phenazine-based anolyte for aqueous organic redox flow batteries", Aaron Hollas et al., Nature energy, Vol. 3, Juni 2018, Seiten 508 - 514, beschreibt Anolyte für Redox-Flow-Batterien auf Basis wässriger "organischer" Elektrolyte beziehungsweise auf Basis wässriger Elektrolyte mit einer redox-aktiven organischen Spezies. Diese gewinnen zunehmend an Bedeutung.

Im Anwendungsfall einer Redox-Flow-Zelle sind jeweils elektrisch leitfähige, dichte Beschichtungen erforderlich. Diese nehmen die Funktion einer Barriereschicht ein und können durch zusätzliche darauf aufgebrachte Schichten im Hinblick auf ihre Leistungsfähigkeit, insbesondere katalytische Wirksamkeit, gesteigert werden. Die Anforderungen lassen sich wie folgt zusammenfassen:
Elektrochemische Stabilität:
pH-Bereich: 1-14
Potentialbereich: -1 V NHE bis +3 V NHE (Kurzzeit: -2 V NHE bis +3 V NHE) Laufzeit: > 500 h

### Grenzflächenwiderstand:

< 100 mOhm cm² (bei 100 N/cm² Kontaktdruck)

Die KR 2013 0 129 622 A offenbart eine metallische Substratplatte für eine Brennstoffzelle mit einer metallischen Beschichtung in einer Schichtdicke im Bereich von 0,01 bis 5 µm aus mindestens einem der folgenden Metalle: Zr, Cu, Au, Ag, Mo, W, Cr, Ti, Mn, Fe, Co, Ni, Al, Ta. Auf der metallischen Beschichtung ist eine, gegebenenfalls amorphe, Kohlenstoffschicht in einer Schichtdicke im Bereich von 0,01 bis 5 µm angeordnet, die mit mindestens einem der Elemente N, B, Si, Ta in einer Konzentration im Bereich von 0,1 bis 25 at.-% dotiert ist.

Die KR 101 371 163 B1 beschreibt eine DLC-beschichtete Elektrode für eine Redox-Flusszelle. Die Elektrode umfasst ein metallisches Substrat aus Titan, Aluminium oder Kupfer, das mit der DLC-Beschichtung versehen ist. Bei der DLC-Beschichtung kann es sich um eine tetraedrische amorphe Kohlenstoffschicht handeln. Weiterhin liegt ein Wasserstoffanteil in der DLC-Beschichtung vor.

Es ist Aufgabe der Erfindung, eine Redox-Flow-Zelle bereitzustellen, welches die Anforderungen an eine elektrochemische Stabilität und einen geringen Grenzflächenwiderstand erfüllt. Weiterhin ist es Aufgabe der Erfindung, eine Redox-Flow-Batterie anzugeben.

Die Aufgabe wird für die Redox-Flow-Zelle umfassend mindestens ein Bauteil in Form einer Elektrode, welche umfassend ein Metallsubstrat, eine auf dem Metallsubstrat zumindest partiell aufgebrachte metallische erste Schicht und eine auf der ersten Schicht aufgebrachte zweite Schicht, gelöst, indem die metallische erste Schicht eine Schichtdicke von mindestens 3 µm aufweist und überwiegend umfassend mindestens ein Metall der Gruppe umfassend Titan, Niob, Hafnium, Zirkonium, Tantal, Magnesium, Silber, Nickel, Wolfram, ausgebildet ist, und wobei die zweite Schicht aus dotiertem, tetraedrischem amorphem Kohlenstoff ta-C:X gebildet ist, wobei als Dotierstoff X mindestens ein Element vorhanden ist aus der Gruppe umfassend Titan, Niob, Wolfram, Zirkon, Tantal, Hafnium, Molybdän, Kupfer, Silizium, Platin, Palladium, Ruthenium, Iridium, Silber, Bor, Stickstoff, Phosphor, Fluor, Wasserstoff, Sauerstoff, und wobei der Dotierstoff X in einer Konzentration von > 0 bis 20 at.-% in der zweiten Schicht vorhanden ist, wobei die zweite Schicht als Dotierstoff X in einer Menge im Bereich von 0,1 bis 10 at.-% Silizium, Wasserstoff und Sauerstoff aufweist und als Dotierstoff X mindestens ein weiteres Element vorhanden ist aus der Gruppe umfassend Titan, Niob, Wolfram, Zirkon, Tantal, Hafnium, Molybdän, Kupfer, Platin, Palladium, Ruthenium, Iridium, Silber.

Eine Redox-Flow-Zelle umfassend ein derartiges Bauteil erfüllt zuverlässige die obigen Vorgaben an die geforderte elektrochemische Stabilität sowie den Grenzflächenwiderstand. Die Schichtdicke der ersten Schicht ist zur Bildung einer dichten, porenfreien Barriere von mindestens 3µm erforderlich.

Eine zweite Schicht ist der nicht vorveröffentlichten Anmeldung
DE 10 2019 116 000.6 zu entnehmen, deren Deckschicht hier der zweiten Schicht entspricht.

Die zweite Schicht aus dotiertem, tetraedrischem amorphem Kohlenstoff ta-C:X weist dabei überwiegend sp³-hybridisierte Bindungen auf. Dabei wird hier unter einem tetraedrisch amorphen Kohlenstoff ta-C verstanden, wenn der sp³-Hybridisierungsanteil in der zweiten Schicht bei über 50 % liegt.

Es können mehrere solche zweite Schichten vorhanden sein, die die gleiche oder auch voneinander abweichende Zusammensetzungen aufweisen können. Eine Anzahl n an zweiten Schichten kann hierbei jeweils im Bereich von n ≥ 2 bis 100 liegen. Dabei sind bevorzugt zwei bis 100 zweite Schichten aufeinander angeordnet. Somit beträgt eine bevorzugte Schichtdicke der zweiten Schicht(en) in Fall c) hier 3 nm bis 4,5 µm.

Erfindungsgemäß ist die zweite Schicht aus ta-C:X gebildet, wobei der Dotierstoff X aus Silizium, Wasserstoff und Sauerstoff gebildet ist. Dabei ist der Dotierstoff X (hier Si, H, O) in einer Menge im Bereich von 0,1 bis 10 at.-% vorhanden. Erfindungsgemäß ist in der zweiten Schicht als Dotierstoff X mindestens ein weiteres Element vorhanden aus der Gruppe umfassend Titan, Niob, Wolfram, Zirkon, Tantal, Hafnium, Molybdän, Kupfer, Platin, Palladium, Ruthenium, Iridium, Silber.

Die metallische erste Schicht umfasst vorzugsweise mindestens ein Metall der Gruppe umfassend Magnesium, Silber, Nickel, Wolfram. In alkalischer Umgebung ist es zudem besonders bevorzugt, wenn die erste Schicht Silber und/oder Nickel und/oder Magnesium umfasst. In saurer Umgebung ist es besonders bevorzugt, wenn die erste Schicht Wolfram oder Wolfram und Titan umfasst. Dabei ist ein Anteil in der ersten Schicht von mindestens 50 At.-% der genannten Metalle, insbesondere von mindestens 90 At.-%, bevorzugt.

Das Metallsubstrat ist vorzugsweise aus einem Material aus der Gruppe umfassend Edelstahl, wie die Sorten 1.4404 oder DC04, weiterhin Aluminium, eine AluminiumLegierung, eine überwiegend Zinn enthaltende Legierung, gebildet.

Das Metallsubstrat ist insbesondere in Form eines Metallblechs oder einer Metallfolie mit einer Dicke im Bereich von 0,05 bis 1 mm ausgebildet. Weiterhin kann das Metallblech oder die Metallfolie eingeprägte dreidimensionale Strukturen aufweisen, um die Oberfläche zu vergrößern und so die aktive Kontaktfläche zu einem Fluid zu erhöhen und die Fluidverteilung in einer Redox-Flow-Zelle zu verbessern.

Es hat sich bewährt, wenn die metallische erste Schicht durch galvanische Abscheidung auf dem Metallsubstrat ausgebildet ist und die zweite Schicht durch ein PVD-Verfahren auf der ersten Schicht ausgebildet ist. Bevorzugt sind die erste und die zweite Schicht jeweils durch ein PVD-Verfahren gebildet. Für die Abscheidung der ersten Schicht hat sich dabei die Verwendung eines PVD-C-Arc+ - Verfahrens bewährt.

Weiterhin hat es sich bewährt, wenn die erste Schicht durch ein PVD-Verfahren gebildet ist und mit Kohlenstoff und/oder Stickstoff und/oder Bor und/oder Fluor dotiert ist. In diesem Fall sind also die erste Schicht und die zweite Schicht jeweils durch ein PVD-Verfahren gebildet.

Die Aufgabe wird weiterhin für eine Redox-Flow-Zelle gelöst, umfassend mindestens ein erfindungsgemäßes Bauteil in Form einer Elektrode. Es können aufgrund der geringen möglichen Dicken der Elektroden kleinbauende Redox-Flow-Batterien umfassend eine Mehrzahl an Redox-Flow-Zellen hergestellt werden, die zudem einen geringen Herstellungspreis aufweisen. So werden zur Ausbildung einer Redox-Flow-Batterie bevorzugt mehr als 10, insbesondere mehr als 50 Redox-Flow-Zellen elektrisch miteinander verschaltet eingesetzt.

Als für eine Redox-Flow-Zelle oder eine Redox-Flow-Batterie geeigneter Anolyt wird hier beispielhaft genannt:
1.4 M 7,8-Dihydroxyphenazin-2-sulfonsäure (kurz: DHPS)
gelöst in 1 molarer Natronlauge

Als für eine Redox-Flow-Zelle oder eine Redox-Flow-Batterie geeigneter Katholyt wird hier beispielhaft genannt:
0.31 M Kaliumhexacyanoferrat(II) und 0.31 M Kaliumhexacyanoferrat(III)
gelöst in 2 molarer Natronlauge.

Es werden bevorzugt Elektrolyt-Kombinationen mit wässrigen Elektrolyten mit einer redox-aktiven organischen und/oder metallischen Spezies auf der Anolyt-Seite zur Bildung einer Redox-Flow-Zelle oder einer Redox-Flow-Batterie verwendet.

Die Figuren 1 bis 5 sollen erfindungsgemäße Bauteile und eine Redox-Flow-Zelle beziehungsweise eine Redox-Flow-Batterie beispielhaft erläutern. So zeigt:
- Figur 1: ein Bauteil umfassend ein Metallsubstrat und ein Schichtsystem aus einer ersten Schicht und einer zweiten Schicht;
- Figur 2: das Bauteil gemäß Figur 1 im Schnittbild;
- Figur 3: ein weiteres Bauteil mit dreidimensionaler Strukturierung in der Seitenansicht;
- Figur 4: ein Bauteil in Form einer Elektrode mit einem dreidimensional strukturierten Flussfeld; und
- Figur 5: eine Redox-Flow-Zelle beziehungsweise eine Redox-Flow-Batterie mit einer Redox-Flow-Zelle.

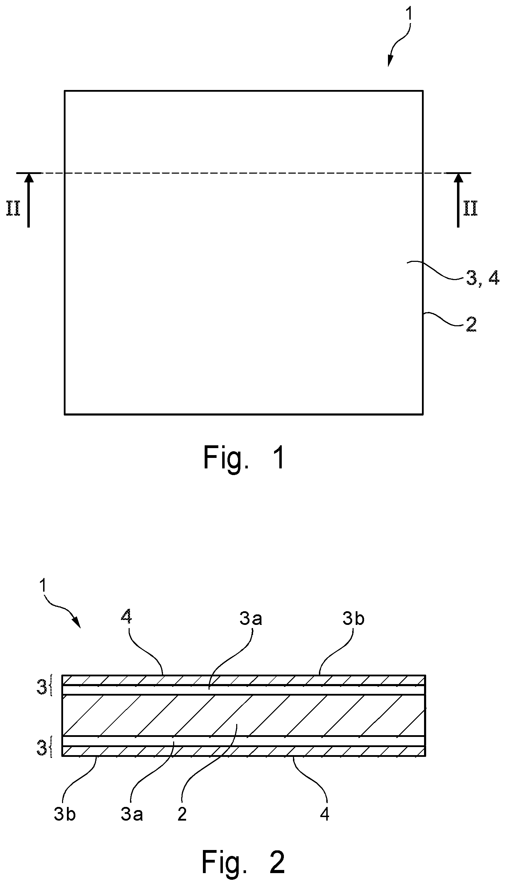

Figur 1 zeigt ein Bauteil 1 umfassend ein Metallsubstrat 2 und ein Schichtsystem 3 umfassend eine erste Schicht 3a und eine zweite Schicht 3b (vergleiche Figur 2) in der Draufsicht auf eine Oberfläche 4.

Figur 2 zeigt das Bauteil 1 gemäß Figur 1 im Schnittbild II-II. Gleiche Bezugszeichen wie in Figur 1 kennzeichnen gleiche Elemente. Erkennbar ist nun das Metallsubstrat 2, hier beispielsweise aus Edelstahl, in Form eines Metallbleches. Das Metallblech ist beidseitig galvanisch mit einer ersten Schicht 3a aus Titan in einer Schichtdicke von 5µm beschichtet. Auf der ersten Schicht 3a befindet sich jeweils eine zweite Schicht 3b aus einer taC:X-Schicht in einer Schichtdicke von 5 nm, welche als Dotierungselemente X hier Silizium und/oder Wasserstoff und/oder Sauerstoff aufweist.

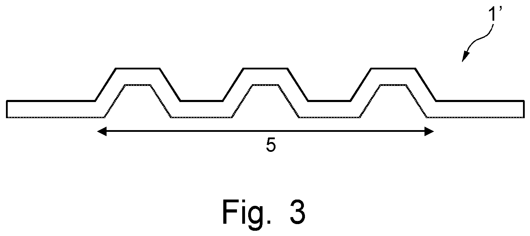

Figur 3 zeigt ein weiteres Bauteil 1' mit dreidimensionaler Strukturierung 5 in der Seitenansicht. Das Bauteil 1' umfasst ein hier nicht sichtbares Metallsubstrat, das allseitig von einem Schichtsystem 3 gemäß Figur 2 bedeckt ist.

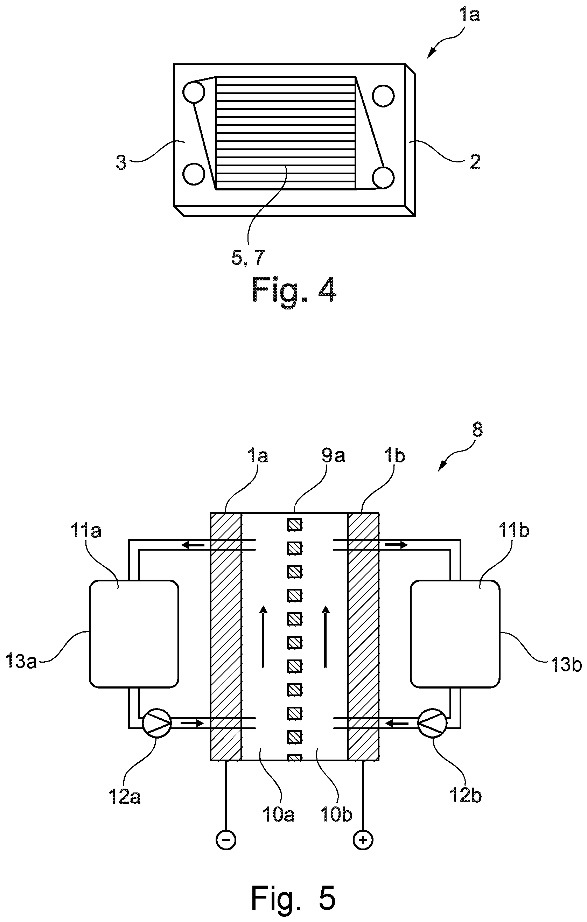

Figur 4 zeigt ein Bauteil 1a in Form einer Elektrode in dreidimensionaler Ansicht umfassend ein Metallsubstrat 2 in Form eines Metallblechs aus Aluminium beschichtet mit einem Schichtsystem 3 umfassend eine erste Schicht 3a aus Wolfram und eine zweite Schicht 3b aus einer Wolfram-dotierten ta-C:X-Schicht. In dem Metallsubstrat 2 ist eine dreidimensionale Strukturierung 5 zur Ausbildung jeweils eines Flussfeldes 7 vorhanden, so dass eine Vergrößerung der Oberfläche der Elektrode resultiert, die in einer Redox-Flow-Zelle 8 (vergleiche Figur 5) von einem Elektrolyten angeströmt werden soll.

Figur 5 zeigt eine Redox-Flow-Zelle 8 beziehungsweise eine Redox-Flow-Batterie mit einer Redox-Flow-Zelle 8. Die Redox-Flow-Zelle 8 umfasst zwei Bauteile 1a, 1b in Form von Elektroden (vergleiche Figur 4), einen ersten Reaktionsraum 10a und einen zweiten Reaktionsraum 10b, wobei jeder Reaktionsraum 10a, 10b in Kontakt mit einer der Elektroden steht. Die hier nicht sichtbaren Flussfelder 7 (vergleiche Figur 4) der Elektroden sind einer Ionenaustauschmembran 9a zugewandt ausgerichtet. Die Reaktionsräume 10a, 10b sind durch die Ionenaustauschmembran 9a voneinander getrennt. Ein flüssiger Anolyt 11a wird aus einem Tank 13a über eine Pumpe 12a in den ersten Reaktionsraum 10a gepumpt und zwischen dem Bauteil 1a und der Ionenaustauschmembran 9a hindurchgeführt. Ein flüssiger Katholyt 11b wird aus einem Tank 13b über eine Pumpe 12b in den zweiten Reaktionsraum 10b gepumpt und zwischen dem Bauteil 1b und der Ionenaustauschmembran 9a hindurchgeführt. Es erfolgt ein Ionentausch über die Ionenaustauschmembran 9a hinweg, wobei aufgrund der Redox-Reaktion an den Elektroden elektrische Energie frei wird.

### Bezugszeichenliste

- 1, 1', 1a, 1b: Bauteil
- 2: Metallsubstrat
- 3: Schichtsystem
- 3a: erste Schicht
- 3b: zweite Schicht
- 4: Oberfläche
- 5: dreidimensionale Strukturierung
- 6: Gasverteilerstruktur
- 7: Flussfeld
- 8: Redox-Flow-Zelle
- 9a: Ionenaustauschmembran
- 10a: erster Reaktionsraum
- 10b: zweiter Reaktionsraum
- 11a: Anolyt
- 11b: Katholyt
- 12a, 12b: Pumpe
- 13a, 13b: Tank

## Patentansprüche

1. Redox-Flow-Zelle (8), umfassend mindestens ein Bauteil (1) in Form einer Elektrode umfassend ein Metallsubstrat (2), eine auf dem Metallsubstrat (2) zumindest partiell aufgebrachte metallische erste Schicht (3a) und eine auf der ersten Schicht (3a) aufgebrachte zweite Schicht (3b), wobei die metallische erste Schicht (3a) eine Schichtdicke von mindestens 3 µm aufweist und überwiegend umfassend mindestens ein Metall der Gruppe umfassend Titan, Niob, Hafnium, Zirkonium, Tantal, Magnesium, Silber, Nickel, Wolfram, ausgebildet ist, und wobei die zweite Schicht (3b) aus dotiertem, tetraedrischem amorphem Kohlenstoff ta-C:X gebildet ist, wobei als Dotierstoff X mindestens ein Element vorhanden ist aus der Gruppe umfassend Titan, Niob, Wolfram, Zirkon, Tantal, Hafnium, Molybdän, Kupfer, Silizium, Platin, Palladium, Ruthenium, Iridium, Silber, Bor, Stickstoff, Phosphor, Fluor, Wasserstoff, Sauerstoff, und wobei der Dotierstoff X in einer Konzentration von > 0 bis 20 at.-% in der zweiten Schicht vorhanden ist,
wobei die zweite Schicht als Dotierstoff X in einer Menge im Bereich von 0,1 bis 10 at.-% Silizium, Wasserstoff und Sauerstoff aufweist und als Dotierstoff X mindestens ein weiteres Element vorhanden ist aus der Gruppe umfassend Titan, Niob, Wolfram, Zirkon, Tantal, Hafnium, Molybdän, Kupfer, Platin, Palladium, Ruthenium, Iridium, Silber.

2. Redox-Flow-Zelle (8) nach Anspruch 1, wobei die metallische erste Schicht (3a) umfassend mindestens ein Metall der Gruppe umfassend Magnesium, Silber, Nickel, Wolfram, ausgebildet ist.

3. Redox-Flow-Zelle (8) nach einem der Ansprüche 1 oder 2, wobei die metallische erste Schicht (3a) durch galvanische Abscheidung auf dem Metallsubstrat ausgebildet ist und die zweite Schicht (3b) durch ein PVD-Verfahren auf der ersten Schicht (3a) ausgebildet ist oder wobei die erste Schicht (3a) und die zweite Schicht (3b) jeweils durch ein PVD-Verfahren gebildet sind.

4. Redox-Flow-Zelle (8) nach Anspruch 3, wobei die erste Schicht (3a) durch ein PVD-Verfahren gebildet und mit Kohlenstoff und/oder Stickstoff und/oder Bor und/oder Fluor dotiert ist.

5. Redox-Flow-Zelle (8) nach einem der Ansprüche 1 bis 4, wobei mehrere zweite Schichten (3b) übereinander ausgebildet sind.

6. Redox-Flow-Zelle (8) nach einem der Ansprüche 1 bis 5, wobei die Redox-Flow-Zelle (8) einen wässrigen Elektrolyten mit einer redox-aktiven organischen und/oder metallischen Spezies aufweist.

7. Redox-Flow-Zelle (8) nach einem der Ansprüche 1 bis 6, wobei das Metallsubstrat (2) aus einem Material aus der Gruppe umfassend Edelstahl, Aluminium, eine Aluminium-Legierung, eine überwiegend Zinn enthaltende Legierung, gebildet ist.

8. Redox-Flow-Zelle (8) nach einem der Ansprüche 1 bis 7, wobei das Metallsubstrat (2) in Form eines Metallblechs oder einer Metallfolie mit einer Dicke im Bereich von 0,05 bis 1 mm ausgebildet ist und weiterhin eingeprägte dreidimensionale Strukturen aufweist.

9. Redox-Flow-Batterie umfassend mehrere Redox-Flow-Zellen (8) nach einem der Ansprüche 1 bis 8.

## Claims

1. A redox flow cell (8) comprising at least one component (1) in the form of an electrode comprising a metal substrate (2), a metallic first layer (3a) at least partially applied to the metal substrate (2), and a second layer (3b) applied to the first layer (3a), wherein the metallic first layer (3a) has a layer thickness of at least 3 µm and is formed predominantly comprising at least one metal from the group comprising titanium, niobium, hafnium, zirconium, tantalum, magnesium, silver, nickel, tungsten, and wherein the second layer (3b) is formed of doped tetrahedral amorphous carbon ta-C:X, wherein at least one element from the group comprising titanium, niobium, tungsten, zirconium, tantalum, hafnium, molybdenum, copper, silicon, platinum, palladium, ruthenium, iridium, silver, boron, nitrogen, phosphorus, fluorine, hydrogen, and oxygen is provided as the dopant X, and wherein the dopant X is provided in the second layer at a concentration of > 0 to 20 at.%,
wherein the second layer comprises silicon, hydrogen and oxygen as the dopant X in an amount in the range of 0.1 to 10 at.% and at least one further element from the group comprising titanium, niobium, tungsten, zirconium, tantalum, hafnium, molybdenum, copper, platinum, palladium, ruthenium, iridium, and silver is provided as the dopant X.

2. The redox flow cell (8) according to claim 1, wherein the metallic first layer (3a) is formed comprising at least one metal from the group comprising magnesium, silver, nickel, and tungsten.

3. The redox flow cell (8) according to either one of claims 1 or 2, wherein the metallic first layer (3a) is formed on the metal substrate by electroplating and the second layer (3b) is formed on the first layer (3a) by a PVD process or wherein the first layer (3a) and the second layer (3b) are each formed by a PVD process.

4. The redox flow cell (8) according to claim 3, wherein the first layer (3a) is formed by a PVD process and is doped with carbon and/or nitrogen and/or boron and/or fluorine.

5. The redox flow cell (8) according to any one of claims 1 to 4, wherein a plurality of second layers (3b) are formed on top of one another.

6. The redox flow cell (8) according to any one of claims 1 to 5, wherein the redox flow cell (8) has an aqueous electrolyte with a redox-active organic and/or metallic species.

7. The redox flow cell (8) according to any one of claims 1 to 6, wherein the metal substrate (2) is formed from a material from the group comprising stainless steel, aluminum, an aluminum alloy, and an alloy containing predominantly tin.

8. The redox flow cell (8) according to any one of claims 1 to 7, wherein the metal substrate (2) is formed in the form of a metal sheet or a metal foil with a thickness in the range of 0.05 to 1 mm and further has embossed three-dimensional structures.

9. A redox flow battery comprising a plurality of redox flow cells (8) according to any one of claims 1 to 8.

## Revendications

1. Cellule redox (8), comprenant au moins un élément constitutif (1) sous la forme d'une électrode comprenant un substrat métallique (2), une première couche métallique (3a) au moins partiellement appliquée sur le substrat métallique (2) et une seconde couche (3b) appliquée sur la première couche (3a), dans laquelle la première couche métallique (3a) présente une épaisseur de couche d'au moins 3 µm et est réalisée principalement de manière à comprendre au moins un métal parmi le groupe constitué du titane, du niobium, du hafnium, du zirconium, du tantale, du magnésium, de l'argent, du nickel et du tungstène, et dans laquelle la seconde couche (3b) est constituée de carbone amorphe tétraédrique dopé ta-C:X, dans laquelle en guise de dopant X au moins un élément est présent parmi le groupe constitué du titane, du niobium, du tungstène, du zirconium, du tantale, du hafnium, du molybdène, du cuivre, du silicium, du platine, du palladium, du ruthénium, de l'iridium, de l'argent, du bore, de l'azote, du phosphore, du fluor, de l'hydrogène et de l'oxygène, et dans laquelle le dopant X est présent en une concentration de > 0 à 20 % atomiques dans la seconde couche,
dans laquelle la seconde couche présente du silicium, de l'hydrogène et de l'oxygène en guise de dopant X en une quantité dans la plage de 0,1 à 10 % atomiques et en guise de dopant X, au moins un autre élément est présent parmi le groupe comprenant le titane, le niobium, le tungstène, le zirconium, le tantale, le hafnium, le molybdène, le cuivre, le platine, le palladium, le ruthénium, l'iridium, l'argent.

2. Cellule redox (8) selon la revendication 1, dans laquelle la première couche métallique (3a) est réalisée comprenant au moins un métal du groupe comprenant le magnésium, l'argent, le nickel, le tungstène.

3. Cellule redox (8) selon l'une des revendications 1 ou 2, dans laquelle la première couche métallique (3a) est réalisée par électrodéposition sur le substrat métallique et la seconde couche (3b) est réalisée sur la première couche (3a) par un procédé PVD ou dans laquelle la première couche (3a) et la seconde couche (3b) sont respectivement formées par un procédé PVD.

4. Cellule redox (8) selon la revendication 3, dans laquelle la première couche (3a) est formée par un procédé PVD et est dopée avec du carbone et/ou de l'azote et/ou du bore et/ou du fluor.

5. Cellule redox (8) selon l'une des revendications 1 à 4, dans laquelle plusieurs secondes couches (3b) sont réalisées les unes au-dessus des autres.

6. Cellule redox (8) selon l'une des revendications 1 à 5, dans laquelle la cellule redox (8) présente un électrolyte aqueux comportant une espèce métallique et/ou organique à activité redox.

7. Cellule redox (8) selon l'une des revendications 1 à 6, dans laquelle le substrat métallique (2) est formé d'un matériau du groupe comprenant l'acier inoxydable, l'aluminium, un alliage d'aluminium, un alliage contenant principalement de l'étain.

8. Cellule redox (8) selon l'une des revendications 1 à 7, dans laquelle le substrat métallique (2) est réalisé sous la forme d'une tôle ou d'une feuille métallique comportant une épaisseur dans la plage de 0,05 à 1 mm et présente en outre des structures tridimensionnelles en relief.

9. Batterie à circulation comprenant plusieurs cellules redox (8) selon l'une des revendications 1 à 8.
